# EUROPEAN PATENT APPLICATION

(11) **EP 4 507 227 A1**
(43) Date of publication of application: **12.02.2025**
(21) Application number: 24192443.0
(22) Date of filing: 01.08.2024
(51) Int. Cl.: H04L 1/1829, H04L 1/1867

(54) **NON-TERRESTRIAL NETWORK (NTN) UPLINK COVERAGE ENHANCEMENT**

(30) Priority: 09.08.2023 US 202363531599 P; 26.07.2024 US 202418785704
(71) Applicant: Apple Inc., Cupertino, CA 95014 (US)
(72) Inventor: YE, Chunxuan, San Diego, California (US); YAO, Chunhai, Beijing (CN); ZHANG, Dawei, Saratoga, California (US); SUN, Haitong, Cupertino, California (US); HE, Hong, San Jose, California (US); CUI, Jie, San Jose, California (US); ZENG, Wei, Saratoga, California (US)
(74) Representative: Simmons & Simmons

(57) **Abstract**

Disclosed are methods, systems, and computer-readable medium to perform operations including receiving configuration data specifying a repetition factor for a physical uplink control channel (PUCCH) for message B hybrid automatic repeat request (HARQ-ACK); receiving a reference signal receive power (RSRP) threshold for PUCCH repetition for the HARQ-ACK transmission; transmitting a capability report for the PUCCH repetition number for the HARQ-ACK transmission or a request for a PUCCH repetition number for the HARQ-ACK transmission; receiving the PUCCH repetition number for the HARQ-ACK transmission; and applying the indicated PUCCH repetition number for the HARQ-ACK transmission.

## Description

### CLAIM OF PRIORITY

This application claims priority under 35 U.S.C. §119(e) to U.S. Patent Application Serial No. 63/531,599, filed on August 9, 2023, the entire contents of which are hereby incorporated by reference.

### BACKGROUND

Wireless communication networks provide integrated communication platforms and telecommunication services to wireless user devices. Example telecommunication services include telephony, data (e.g., voice, audio, and/or video data), messaging, and/or other services. The wireless communication networks have wireless access nodes that exchange wireless signals with the wireless user devices using wireless network protocols, such as protocols described in various telecommunication standards promulgated by the Third Generation Partnership Project (3GPP). Example wireless communication networks include time division multiple access (TDMA) networks, frequency-division multiple access (FDMA) networks, orthogonal frequency-division multiple access (OFDMA) networks, Long Term Evolution (LTE), and Fifth Generation New Radio (5GNR). The wireless communication networks facilitate mobile broadband service using technologies such as OFDM, multiple input multiple output (MIMO), advanced channel coding, massive MIMO, beamforming, and/or other features.

### SUMMARY

The processes and systems described herein include a signaling and procedure for performing physical uplink control channel (PUCCH) repetition for message B hybrid automatic repeat request (HARQ-ACK) responsive to message B sent by a network. The processes and systems described in further detail below describe the prioritization between physical random access channel (PRACH) repetition, PUCCH repetition for Msg4/MsgB HARQ-ACK and sidelink transmission/reception. Specifically, the UE can perform the UL and SL simultaneously. The UE may need to prioritize SL or UL for transmission. In the legacy system, if the UE is to send the PRACH and the PUCCH repetition for Msg4 or Msg 4 HARQ-ACK repetition, a message for HARQ-ACK repetition is newly introduced for use across multiple slots. The prioritization of this message with the SL transmissions is defined herein. The processes and systems described in further detail below describe the UE reported capability or assistance information for determining TDW size.

In a general aspect, a process includes receiving configuration data specifying a repetition factor for a physical uplink control channel (PUCCH) for a hybrid automatic repeat request (HARQ-ACK) transmission associated with a random access message; receiving a reference signal receive power (RSRP) threshold for PUCCH repetition for the HARQ-ACK transmission; transmitting a capability report for a PUCCH repetition number for the HARQ-ACK transmission or a request for the PUCCH repetition number for the HARQ-ACK transmission; receiving an indication of the PUCCH repetition number for the HARQ-ACK transmission; and transmitting the HARQ-ACK transmission with repetition based on the indicated PUCCH repetition number.

In some implementations, the repetition factor for PUCCH for the HARQ-ACK transmission is one of 1,2, 4, or 8.

In some implementations, the process includes applying a different repetition factor for PUCCH repetition for message 4 HARQ-ACK than for the PUCCH repetition for the HARQ-ACK transmission.

In some implementations, the RSRP threshold for PUCCH repetition for HARQ-ACK transmission is different than a PUCCH repetition for Msg4 HARQ-ACK.

In some implementations, the capability report or request for the HARQ-ACK transmission is based on a 2-step random access channel (RACH) capability of a user equipment (UE). In some implementations, the capability report or request comprises a 1-bit indication configured to indicate a first state indicating no repetition capability or request or a second state indicating the repetition capability or request of the UE.

In some implementations, the process includes determining that a RSRP measurement is below the RSRP threshold and that a UE has a capability of PUCCH repetition; and transmitting the request for the PUCCH repetition for the HARQ-ACK transmission.

In some implementations, the RSRP threshold is not configured or is configured with a specific value. The process can include transmitting the capability report on PUCCH repetition for Msg B HARQ-ACK.

In some implementations, the capability report or request is transmitted using a message A physical uplink shared channel (PUSCH). In some implementations, a reserved bit in a medium access control (MAC) sub-header indicates the repetition capability report or request for the PUCCH repetition number. In some implementations, a logical cell identifier (LCID) code points to indicate repetition capability or request. In some implementations, the repetition capability report or request for the PUCCH repetition number is transmitted using a message A physical random-access channel (PRACH). In some implementations, the message B scheduling downlink control information (DCI) fields are configured for indicating the PUCCH repetition number. In some implementations, the DCI fields include one or more of reserved bit(s) or bits in an MCS field.

In some implementations, one or more fields of the successRAR are configured for indicating the PUCCH repetition number. In some implementations, the one or more fields of the successRAR include a channel access-CPext field, a reserved bit, a transmit power control (TPC) field, a HARQ feedback timing indicator, or a combination thereof.

In some implementations, the PUCCH repetition for HARQ-ACK transmission has a higher priority than sidelink transmissions or receptions.

In a general aspect, a process includes transmitting a user equipment (UE) capability of a maximum demodulation reference signal (DMRS) bundling duration representing a maximum time domain window (TDW) size for non-terrestrial network (NTN) or whether the UE supports a timing advance (TA) pre-compensation update within an actual TDW that does not violate phase difference limit; receiving a configuration of a physical uplink shared channel (PUSCH) TDW length; transmitting assistance information based on the UE capability; receiving an actual TDW determination on an event; and applying the indicated actual TDW determination based on receiving the actual TDW determination.

In some implementations, the process includes transmitting a second maximum TDW size that accounts for the TA pre-compensation. In some implementations, a nominal TDW size includes a minimum between the second maximum TDW size and the maximum TDW size of the UE capability. In some implementations, the process includes transmitting the UE capability of the maximum demodulation reference signal (DMRS) bundling duration representing the maximum TDW size for the NTN and whether the UE supports the TA pre-compensation update within the actual TDW that does not violate phase difference limit, wherein a nominal TDW size is based on the maximum TDW size. In some implementations, the assistance information is transmitted when a new epoch time is broadcasted, and the old epoch time has exceeded a validity duration. The process can includes adjusting the TA value during the actual TDW size. In some implementations, the UE capability is transmitted using a MAC CE, radio resource control signaling, or uplink control information signaling. In some implementations, a TA adjustment timing of the UE capability includes one of an absolute timing or a relative timing from the transmission timing. In some implementations, the TA adjustment timing of the UE capability is based on a current epoch time and validity duration.

In a general aspect, a system includes one or more computers and one or more storage devices on which are stored instructions that are operable, when executed by the one or more computers, to cause the one or more computers to perform operations comprising: receiving configuration data specifying a repetition factor for a physical uplink control channel (PUCCH) for message B hybrid automatic repeat request (HARQ-ACK); receiving a reference signal receive power (RSRP) threshold for PUCCH repetition for the HARQ-ACK transmission; transmitting a capability report for the PUCCH repetition number for the HARQ-ACK transmission or a request for a PUCCH repetition number for the HARQ-ACK transmission; receiving the PUCCH repetition number for the HARQ-ACK transmission; and applying the indicated PUCCH repetition number for the HARQ-ACK transmission.

In a general aspect, a non-transitory computer storage medium encoded with instructions that, when executed by one or more computers, cause the one or more computers to perform operations comprising: receiving configuration data specifying a repetition factor for a physical uplink control channel (PUCCH) for message B hybrid automatic repeat request (HARQ-ACK); receiving a reference signal receive power (RSRP) threshold for PUCCH repetition for the HARQ-ACK transmission; transmitting a capability report for the PUCCH repetition number for the HARQ-ACK transmission or a request for a PUCCH repetition number for the HARQ-ACK transmission; receiving the PUCCH repetition number for the HARQ-ACK transmission; and applying the indicated PUCCH repetition number for the HARQ-ACK transmission.

In a general aspect, a one or more non-transitory computer storage media are encoded with instructions that, when executed by one or more computers, cause the one or more computers to perform the processes described herein.

In a general aspect, a system includes one or more computers and one or more storage devices on which are stored instructions that are operable, when executed by the one or more computers, to cause the one or more computers to perform process described herein.

The details of one or more embodiments of these systems and methods are set forth in the accompanying drawings and the description below. Other features, objects, and advantages of these systems and methods will be apparent from the description and drawings, and from the claims.

### BRIEF DESCRIPTION OF THE FIGURES

FIG. 1 illustrates a wireless network, according to some implementations.
FIG. 2 illustrates a flowchart of an example method, according to some implementations.
FIG. 3 illustrates example resources for PUCCH repetition.
FIG. 4 illustrates a flowchart of an example method, according to some implementations.
FIG. 5 illustrates an example user equipment (UE), according to some implementations.
FIG. 6 illustrates an example access node, according to some implementations.

### DETAILED DESCRIPTION

For non-terrestrial networks (NTNs), satellites that communicate with a user equipment (UE) are moving at relatively high speeds. The movement of the satellites may result in a phase shift between the UE and the satellite that is acting as a base station. The change in position between the satellite and the UE can affect downlink/uplink timings between the UE and the satellite for establishing a communications link between the UE and the satellite. In addition, the change in position between the satellite and the UE can affect the channel estimation being performed by the UE for establishing a communications link between the UE and the satellite.

For NTN communication, the UE establishes downlink/uplink timings with the satellite using a physical random-access channel (PRACH). The UE and base station are configured to transmit physical downlink shared channel or control channel (PDCCH/PDSCH) or physical uplink control channel or shared channel (PUCCH/PUSCH) transmissions.

The UE is configured for NTN coverage enhancement by accommodating the changes in positioning between the UE and the satellite. To achieve coverage enhancement for NTN scenarios, the UE includes PUCCH enhancements for Msg4 HARQ-ACK repetition. The enhancements help the UE overcome NTN-specific issues, such as time-frequency pre-compensation. For example, PUCCH repetition for NTN coverage enhancement is supported for PUCCH transmission when a dedicated PUCCH resource configuration is not provided. PUCCH for Msg4 HARQ-ACK are applied to any PUCCH transmission by using a common PUCCH resource. A same repetition factor is applied for PUCCH for Msg4 HARQ-ACK and subsequent PUCCH transmissions by using a common PUCCH resource. A base station can provide a dedicated PUCCH configuration using Msg4 PDSCH.

The UE is configured to update a time domain window (TDW) size to accommodate the changes in positioning between the UE and the satellite. The duration of nominal TDWs, not longer than a maximum duration, are configured by satellite (base station). A TDW includes consecutive slot indexes for which the UE is expected to perform transmission for a demodulation reference signal (DMRS) bundle. Specifically, the TDW represents a time for which transmission by the UE is guaranteed to maintain phase continuity and power continuity, even though the satellite is moving quickly relative to the UE.

The UE is configured to report its capability or assistance information for determining the updated time domain window (TDW) size. An actual TDW is determined by the existing events and one of the following options. If there is no additional event, then there is no change for actual TDW determination. If there is a new event for TA pre-compensation timing dynamically indicated by a base station (e.g., a next generation node gNB), then the TA pre-compensation timing can be dynamically indicated by the base station. A UE can perform a TA pre-compensation update at the indicated timing. A detailed indication can be dynamically indicated by the base station. Specifically, the actual TDW is dynamically indicated by the base station. In some implementations, a new event is defined based on epoch time. The epoch time represents a satellite location at a given time, which becomes stale if not updated. The UE uses the satellite orbit information to calculate the TA. When the epoch time becomes stale, the UE recalculates the epoch time and updates the TA for TDW determination. In some implementations, a new event is defined based on antenna switching.

The UE can report assistance information that specifies the TDW size. A first option is that no assistance information is reported by the UE. A second option is that the UE reports a maximum TDW size based on reporting timing. A third option is that the UE reports the TA adjustment timing. A fourth option is that the UE reports an antenna switching interval.

The UE is configured for DMRS bundling for PUSCH to accommodate the changing positions of the satellite relative to the UE. DMRS bundling enables improved channel estimation in which a same or coherent DMRS is transmitted in multiple time slots for coverage enhancement. The UE is configured to perform a time/frequency pre-compensation and a modification of the physical random-access channel (PRACH). Specifically, the UE is configured to reduce a number of transmissions used for RACH procedures to simplify the RACH process. This can reduce requirements for timing adjustments or compensation as the satellite moves relative to the UE.

There are a 4-step RACH and a 2-step RACH. Here, the 4-step RACH is modified. In 2-step RACH, message one and message three are combined. The UE makes one transmission from two transmissions in Msg A. For message B (MsgB), messages 2 and 4 are combined. Here, Msg4 HARQ-ACK is modified. In some scenarios, after a Msg4 PUCCH transmission, it is possible that the UE is still not configured with the dedicated PUCCH resources. At that time, a same repetition factor is applied for PUCCH retransmissions as for the PUCCH for Msg4 HARQ-ACK. After the Msg 4 HARQ-ACK, the PUCCH repetition is performed using the common PUCCH resource configuration.

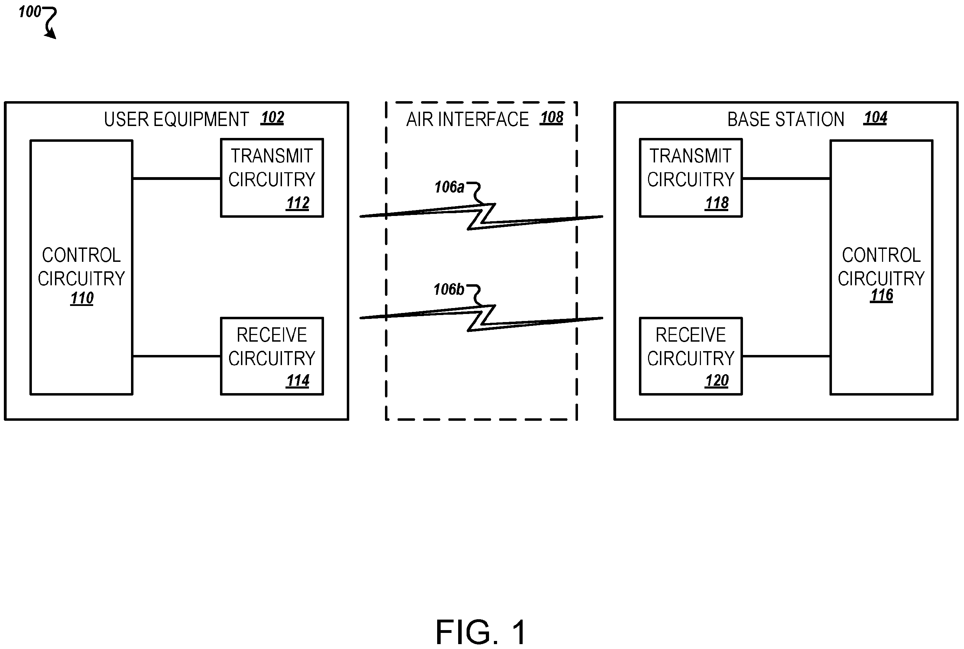

FIG. 1 illustrates a wireless network 100, according to some implementations. The wireless network 100 includes a UE 102 and a base station 104 connected via one or more channels 106A, 106B across an air interface 108. The UE 102 and base station 104 communicate using a system that supports controls for managing the access of the UE 102 to a network via the base station 104.

In some implementations, the wireless network 100 may be a Non-Standalone (NSA) network that incorporates Long Term Evolution (LTE) and Fifth Generation (5G) New Radio (NR) communication standards as defined by the Third Generation Partnership Project (3GPP) technical specifications. For example, the wireless network 100 may be a E-UTRA (Evolved Universal Terrestrial Radio Access)-NR Dual Connectivity (EN-DC) network, or an NR-EUTRA Dual Connectivity (NE-DC) network. In some other implementations, the wireless network 100 may be a Standalone (SA) network that incorporates only 5G NR. Furthermore, other types of communication standards are possible, including future 3GPP systems (e.g., Sixth Generation (6G)), Institute of Electrical and Electronics Engineers (IEEE) 802.11 technology (e.g., IEEE 802.11a; IEEE 802.11b; IEEE 802.11g; IEEE 802.11-2007; IEEE 802.11n; IEEE 802.11-2012; IEEE 802.11ac; or other present or future developed IEEE 802.11 technologies), IEEE 802.16 protocols (e.g., WMAN, WiMAX, etc.), or the like. While aspects may be described herein using terminology commonly associated with 5GNR, aspects of the present disclosure can be applied to other systems, such as 3G, 4G, and/or systems subsequent to 5G (e.g., 6G).

In the wireless network 100, the UE 102 and any other UE in the system may be, for example, any of laptop computers, smartphones, tablet computers, machine-type devices such as smart meters or specialized devices for healthcare, intelligent transportation systems, or any other wireless device. In network 100, the base station 104 provides the UE 102 network connectivity to a broader network (not shown). This UE 102 connectivity is provided via the air interface 108 in a base station service area provided by the base station 104. In some implementations, such a broader network may be a wide area network operated by a cellular network provider or may be the Internet. Each base station service area associated with the base station 104 is supported by one or more antennas integrated with the base station 104. The service areas can be divided into a number of sectors associated with one or more particular antennas. Such sectors may be physically associated with one or more fixed antennas or may be assigned to a physical area with one or more tunable antennas or antenna settings adjustable in a beamforming process used to direct a signal to a particular sector.

The UE 102 includes control circuitry 110 coupled with transmit circuitry 112 and receive circuitry 114. The transmit circuitry 112 and receive circuitry 114 may each be coupled with one or more antennas. The control circuitry 110 may include various combinations of application-specific circuitry and baseband circuitry. The transmit circuitry 112 and receive circuitry 114 may be adapted to transmit and receive data, respectively, and may include radio frequency (RF) circuitry and/or front-end module (FEM) circuitry.

In various implementations, aspects of the transmit circuitry 112, receive circuitry 114, and control circuitry 110 may be integrated in numerous ways to implement the operations described herein. The control circuitry 110 may be adapted or configured to perform various operations, such as those described elsewhere in this disclosure related to a UE.

The transmit circuitry 112 can perform various operations described in this specification. Additionally, the transmit circuitry 112 may transmit using a plurality of multiplexed uplink physical channels. The plurality of uplink physical channels may be multiplexed, e.g., according to time division multiplexing (TDM) or frequency division multiplexing (FDM) along with carrier aggregation. The transmit circuitry 112 may be configured to receive block data from the control circuitry 110 for transmission across the air interface 108.

The receive circuitry 114 can perform various operations described in this specification. Additionally, the receive circuitry 114 may receive a plurality of multiplexed downlink physical channels from the air interface 108 and relay the physical channels to the control circuitry 110. The plurality of downlink physical channels may be multiplexed, e.g., according to TDM or FDM along with carrier aggregation. The transmit circuitry 112 and the receive circuitry 114 may transmit and receive, respectively, both control data and content data (e.g., messages, images, video, etc.) structured within data blocks that are carried by the physical channels.

FIG. 1 also illustrates the base station 104. In some implementations, the base station 104 may be a 5G radio access network (RAN), a next generation RAN, a E-UTRAN, a non-terrestrial cell, or a legacy RAN, such as a UTRAN. As used herein, the term "5G RAN" or the like may refer to the base station 104 that operates in an NR or 5G wireless network 100, and the term "E-UTRAN" or the like may refer to a base station 104 that operates in an LTE or 4G wireless network 100. The UE 102 utilizes connections (or channels) 106A, 106B, each of which includes a physical communications interface or layer.

The base station 104 circuitry may include control circuitry 116 coupled with transmit circuitry 118 and receive circuitry 120. The transmit circuitry 118 and receive circuitry 120 may each be coupled with one or more antennas that may be used to enable communications via the air interface 108. The transmit circuitry 118 and receive circuitry 120 may be adapted to transmit and receive data, respectively, to any UE connected to the base station 104. The receive circuitry 120 may receive a plurality of uplink physical channels from one or more UEs, including the UE 102.

In FIG. 1, the one or more channels 106A, 106B are illustrated as an air interface to enable communicative coupling, and can be consistent with cellular communications protocols, such as a UMTS protocol, a 3GPP LTE protocol, an Advanced long term evolution (LTE-A) protocol, a LTE-based access to unlicensed spectrum (LTE-U), a 5G protocol, a NR protocol, an NR-based access to unlicensed spectrum (NR-U) protocol, and/or any other communications protocol(s). In implementations, the UE 102 may directly exchange communication data via a ProSe interface. The ProSe interface may alternatively be referred to as a sidelink (SL) interface and may include one or more logical channels, including but not limited to a Physical Sidelink Control Channel (PSCCH), a Physical Sidelink Discovery Channel (PSDCH), and a Physical Sidelink Broadcast Channel (PSBCH).

The UE extends coverage for NTN communication links between the UE and a satellite by cha processes for PUCCH/PUSCH repetition for HARQ-ACK transmission, such as MsgB HARQ-ACK. A process includes a prioritization between PRACH repetition, PUCCH repetition for Msg4/MsgB HARQ-ACK, and sidelink transmission/reception. The PUCCH repetition for Msg B HARQ-ACK can include the following. In a first step, the PUCCH repetition factor for Msg B HARQ-ACK is configured. In a second step, a same or different receive signal receive power (RSRP) threshold is applied for PUCCH repetition. The PUCCH repetition is for Msg4 HARQ-ACK and may be applied to PUCCH repetition for Msg B HARQ-ACK. In a third step, the UE reports the UE capability or request on PUCCH repetition for Msg B HARQ-ACK, which is based on its capability of 2-step random access channel (RACH). The UE can send a 1-bit (or 2 state) indication.

The UE can use, for a capability report for NTN-specific PUSCH DMRS bundling, one or more of the following options. DMRS bundling enables improved channel estimation in which a same or coherent DMRS is transmitted in multiple time slots for coverage enhancement. A first option is that there is no new capability reported except for FG44-2. However, FG 30-4 is reported in consideration of pre-compensation to keep phase rotation due to timing drift within the phase difference limit and without taking TA pre-compensation update into account. A second option includes reporting a maximum TDW size for pre-compensation to keep phase rotation due to timing drift within the phase difference limit is performed and without taking TA pre-compensation update into account. In this case, FG 30-4 is not reported for the NTN band. A third option is reporting, by the UE, a support of antenna switching with DMRS bundling in NTN. A fourth option is reporting, by the UE, a maximum TDW size per NTN platform (e.g., low-earth orbit, medium-earth orbit, or geosynchronous orbit) while taking the TA pre-compensation update into account. A fifth option is to report, by the UE, a maximum TDW size per elevation angle while taking the TA pre-compensation update into account. A sixth option is to report, by the UE, support of the actual TDW across pre-compensation segments. The segments defined in release 17 internet of things-to-NTN (IoT-NTN) is used as a baseline. A seventh option is to report, by the UE, support of the TA pre-compensation update within an actual TDW that does not violate a phase difference limit.

In NTN communications, a UE, for communication with a satellite, performs DMRS bundling for PUSCH/PUCCH. DMRS bundling enables improved channel estimation in which a same or coherent DMRS is transmitted in multiple time slots for coverage enhancement. DMRS bundling is performed for PUSCH repetition Type A scheduled by downlink control information (DCI) format 0_1 or 0_2, for PUSCH repetition Type A with configured grant, for PUSCH repetition Type B, for transport block (TB) processing over multiple slots PUSCH and for PUCCH repetitions of PUCCH formats 1, 3, and 4. A UE can report the maximum duration, in number of consecutives slots, during which the UE is able to maintain power consistency and phase continuity under certain tolerance level.

For NR NTN, uplink (UL) coverage enhancement includes PUCCH enhancements for message 4 HARQ-ACK. Message 4 (Msg 4) is related to initial access. The UE sends a message 1 which is the PRACH. The network sends message 2 including the RA grant. Message 3 is sent from the UE to the network for the contention resolution. Message 4 includes the contention resolution and the downlink configuration. Message 4 includes the HARQ-ACK from the network to the UE. This disclosure includes details regarding feedback from the UE to the network, including how the repetition for the message 4 HARQ-ACK is configured.

For the PUSCH DMRS bundling, the UE can use a nominal TDW determination but update the UE capability or assistance information report. A nominal TDW determination is included in the DMRS PUSCH bundling. The nominal TDW includes a time domain window. In legacy systems, channel estimation is performed in one slot. To have a better channel estimation, multiple slots can be used. These slots are the time domain window. The network may perform channel estimation within those slots. To perform DMRS bundling across different slots of the PUSCH transmission, the timing advance (TA) remains unchanged. Additionally, continuity requirements are satisfied for the neighbor to slot. For example, a phase shift should not be larger than 25 degrees. In an NTN scenario, because the satellite is moving, there is a TA drift because the distance between the UE and the satellite is changing. Pre-compensation is needed to satisfy the continuity requirements. In this document, there are nominal TDWs and actual TDWs. A nominal TW is a window size (e.g., of slots) which can be based on the UE configuration. An actual TDW includes the nominal TDW but with DMRS bundling broken out. For example, if a nominal TDW size is five slots, but due to some event that occurs (e.g., UL/DL timing or location events), the actual TDW is only the first three slots. The actual TDW is generally smaller than or equal to the nominal TDW.

The duration of nominal time domain windows (TDWs), not longer than a maximum duration, are configured by satellite (a base station). A TDW includes consecutive slot indexes for which the UE is expected to perform transmission for a DMRS bundle. Specifically, the TDW represents a time for which transmission by the UE is guaranteed to maintain phase continuity and power continuity.

One or multiple nominal TDWs are determined for PUSCH transmissions or PUCCH repetitions. A nominal TDW consists of one or multiple actual TDWs. The UE or satellite define events, which cause power consistency and phase continuity not to be maintained across PUSCH transmissions or PUCCH repetitions within the nominal TDW. An actual TDW is terminated in case an event occurs. A new actual TDW is created in response to semi-static events not triggered by DCI or MAC-CE. Whether a new actual TDW is created in response to dynamic events triggered by DCI is subject to UE capability. Frequency hopping and UL beam switching for multi-transmission/reception point (TRP) operation are regarded as semi-static events. The UE maintains power consistency and phase continuity within an actual TDW across PUSCH transmissions or PUCCH repetitions.

In some implementations the TDW may need to be extended to accommodate the change in position between the UE and the satellite. The time domain window is used for channel estimation by the UE. During the time domain window, the UE measures signals received from the satellite. For example, the UE may perform channel estimation over multiple slots rather than over a single slot.

For NTN-specific PUSCH DMRS bundling, clause 6.1.7 in TS38.214 is applied for nominal TDW determination except for aspects related to UE capabilities and assistance information (if needed). For example, if a PUSCH*-TimeDomainWindowLength* is configured, the nominal TDW is determined by *PUSCH-TimeDomainWindowLength.* Else, a nominal TDW is determined based on UE capability or capabilities signaling.

The PUCCH repetition for MsgB HARQ-ACK, including the general procedure and signaling, are now described. The PUCCH repetition for Msg B HARQ-ACK can include the following. In a first step, the PUCCH repetition factor for Msg B HARQ-ACK is configured. The repetition factor for PUCCH repetition for Msg B HARQ-ACK can be {1,2, 4, 8}. The same or different repetition factor for PUCCH repetition for Msg 4 HARQ-ACK may be applied to PUCCH repetition for MsgB HARQ-ACK.

In a second step, a receive signal receive power (RSRP) threshold to trigger PUCCH repetition for MsgB HARQ-ACK is same or different from the RSRP threshold to trigger PUCCH repetition for Msg4 HARQ-ACK. The RSRP threshold to trigger PUCCH repetition for Msg4 HARQ-ACK may be applied to trigger PUCCH repetition for MsgB HARQ-ACK with an offset. The RSRP threshold to trigger 2-step RACH in NTN band could be lower than the RSRP threshold (i.e., "MsgA-RSRP-Threshold") in the IE of "*RACH-ConfigCommonTwoStepRA*" to trigger 2-step RACH in TN band.

In a third step, the UE reports the UE capability or request on PUCCH repetition for Msg B HARQ-ACK, which is based on its capability of 2-step RACH. The UE can send a 1-bit (or 2 state) indication. State 1 indicates no repetition capability or request. State 2 indicates repetition or request. If the RSRP threshold is configured, the UE reports the UE request on PUCCH repetition for Msg B HARQ-ACK if when the UE RSRP measurement is below the RSRP threshold and when the UE has the capability of PUCCH repetition. Otherwise, UE indicates no request on PUCCH repetition for Msg B HARQ-ACK. In another example, if the RSRP threshold is not configured, or configured with a specific value, the UE reports the UE capability on a PUCCH repetition for Msg B HARQ-ACK. In some implementations, the UE performs the capability or request report using the Msg A PUSCH. In some implementations, the UE uses one reserved bit in a in MAC sub-header to indicate repetition capability or request. In some implementations, the UE uses a same or a different reserved bit for indicating repetition capability or request for PUCCH repetition for Msg 4 HARQ-ACK. The UE can use logical cell identifier (LCID) codepoints to indicate repetition capability or request. The UE can send the capability or request report using Msg A PRACH. In some implementations, dedicated PRACH occasions or dedicated PRACH preambles in shared PRACH occasions indicate the repetition capability or request.

In a fourth step, for PUCCH repetition for Msg B HARQ-ACK, the following can be configured. The UE can receive MsgB scheduling DCI fields to indicate PUCCH repetition number. The UE can receive the signal of the PUCCH repetition number using reserved bits. In another example, the UE can receive the signal of the PUCCH repetition number using some bits in MCS field. In some implementations, if the only preamble is detected by network in MsgA, the UE detects fallback random access response (RAR), and then Msg3 is scheduled by RAR grant and there is no PUCCH for MsgB.

The PUCCH repetition for Msg B HARQ-ACK can include the following indication. The bits of the field in successRAR can be reused to indicate PUCCH repetition number of MsgB HARQ-ACK. The UE can re-interpret channel access-CPext if the UE is operating on a non-shared spectrum. The UE can re-interpret bits in HARQ Feedback Timing Indicator. The UE can re-interpret 2-bits TPC commands. The UE can use one reserved bit and a 1-bit re-interpretation of another field.

The prioritization between PUCCH repetition for Msg4/B and sidelink transmission or reception can be as follows. Generally, PRACH repetition, PUCCH repetition for Msg4 HARQ-ACK, or MsgB HARQ-ACK have a higher priority than sidelink transmission/reception. The UE may be scheduled to do the UL transmission and the SL transmission at the same time in which only a single transmission can be performed. The UE determines a high priority for the UL or the SL transmission. In an example, for a half-duplex scenario there may be an UL transmission being performed which prevents the SL repetition from being performed. For example, the PRACH transmissions and the HARQ-ACK feedback are the transmissions made from UE to the network. These UL transmissions have a higher priority than the SL transmission. For the repetition of message 4, the PUCCH for Msg4 HARQ-ACK can last more than one slot. If the repetition of Msg 4 on the slot with SL transmission or reception, the UE will perform the prioritization.

The PUCCH repetition for Msg4 HARQ have a higher priority than the SL transmission or reception. The MsgB HARQ-ACK PUCCH repetition also has a higher priority than SL transmission or reception. The PRACH repetition also has a higher priority than SL transmission or reception, and the PRACH and its repetition or retransmission may also extend to multiple slots.

When the data processing system is configured for prioritization between sidelink transmission or physical sidelink feedback channel, secondary synchronization channel, or physical sidelink broadcast channel (PSFCH/S-SS/PSBCH) block reception, and for uplink transmission other than a PRACH and its repetition, or a PUSCH scheduled by an UL grant in a random access response (RAR) and its retransmission, or a PUSCH corresponding to Type-2 random access procedure and its retransmission, a PUCCH with HARQ-ACK information in response to successRAR and its retransmission/repetition, or a PUCCH indicated by a DCI format 1_0 with cyclic redundancy check (CRC) scrambled by a corresponding temporary cell radio network temporary identifier (TC-RNTI) and its retransmission/repetition, or a PUCCH with sidelink HARQ-ACK information report. In a first scenario, the UL transmission is for a PUSCH or for a PUCCH with priority index 1, and if *sl-PriorityThreshold-UL-URLLC* is provided, the SL transmission or reception has higher priority than the UL transmission if the priority value of the SL transmission or reception is smaller than sl-PriorityThreshold-UL-URLLC; otherwise, the UL transmission has higher priority than the SL transmission or reception. If the first scenario is not satisfied, the UL transmission has higher priority than the SL transmission or reception.

In other scenarios, the SL transmission or reception has higher priority than the UL transmission if the priority value of the SL transmission(s) or reception is smaller than a value for a field *sl-PriorityThreshold.* Otherwise, the UL transmission has higher priority than the SL transmission or reception.

A PRACH transmission and its repetition, or a PUSCH scheduled by an UL grant in a RAR and its retransmission, or a PUSCH for Type-2 random access procedure and its retransmission, or a PUCCH with HARQ-ACK information in response to successRAR and its retransmission/repetition, or a PUCCH indicated by a DCI format 1_0 with CRC scrambled by a corresponding TC-RNTI and its retransmission/repetition has higher priority than a SL transmission or reception.

The UE generates a report for DMRS bundling, which is now described. The UE reports for DMRS bundling includes capabilities information for the UE. Specifically, a nominal TDW size determination can be performed based on the capabilities information. The UE reports a maximum TDW size with pre-compensation that maintains rotation resulting from a timing drift within the phase difference limit. The maximum TDW size does not take a TA pre-compensation updates into account. The UE then reports a maximum TDW size taking a TA pre-compensation update into account. The network determines a minimum between these two reported max TDW sizes to determine a nominal TDW size.

In some implementations, the UE additionally reports whether the UE supports a TA pre-compensation update within an actual TDW that does not violate the phase difference limit. The network uses the first reported maximum TDW size to determine the nominal TDW size.

In another example, the UE performs actual TDW size determination. In a scenario in which the UE's reported capability does not support a TA pre-compensation update within an actual TDW that does not violate phase difference limit, the UE may report assistance information. The triggering conditions include the following. When a new epoch time is broadcasted, and an old epoch time has exceeded its validity duration, then UE adjusts the TA value during an actual TDW size. The epoch time represents a satellite location at a given time, which becomes stale if not updated. The UE uses the satellite orbit information to calculate the TA. When the epoch time becomes stale, the UE recalculates the epoch time and updates the TA for TDW determination.

The container for the UE report can be one of the following. The UE can use a medium access control (MAC) control element (CE), radio resource control (RRC) signaling, or uplink control information (UCI) signaling.

The content of the report for DMRS bundling in the container includes the following. In a first example, the UE's TA adjustment timing includes an absolute timing or a relative timing from the reporting timing. In another example, the TA timing includes the UEs' currently used epoch time and validity duration.

When the UE's reported capability supports TA pre-compensation update within an actual TDW that does not violate phase difference limit, then UE does not report its TA adjustment timing as assistance information. The network dynamically indicates the actual TDW time window for TA adjustment, based on UE reported assistance information. Whether a MAC CE or DCI is used to indicate the actual TDW time window will be based on UE reported assistance information. These processes are subsequently described in further detail.

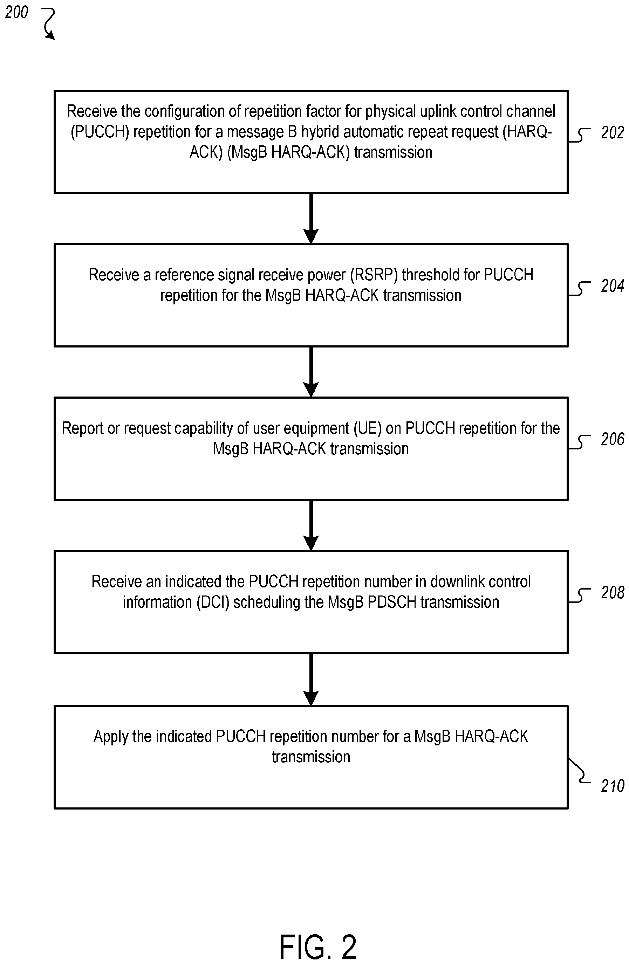

FIG. 2 illustrates a flowchart of an example method 200, according to some implementations. For clarity of presentation, the description that follows generally describes method 200 in the context of the other figures in this description. For example, method 200 can be performed by the UE 102 of FIG. 1. It will be understood that method 200 can be performed, for example, by any suitable system, environment, software, hardware, or a combination of systems, environments, software, and hardware, as appropriate. In some implementations, various steps of method 200 can be run in parallel, in combination, in loops, or in any order.

The method 200 includes receiving (202), by the UE, the configuration of repetition factor for PUCCH repetition for MsgB HARQ-ACK. The repetition factor for PUCCH repetition for Msg B HARQ-ACK can be {1,2, 4, 8}. The same or different repetition factor for PUCCH repetition for Msg 4 HARQ-ACK may be applied to PUCCH repetition for MsgB HARQ-ACK. Generally, for PUCCH repetition, a factor of 1 specifies no repetition (as in legacy systems). A factor of two, four, or eight describe the number of times the message is repeated. If the network supports both two-step and four-step RACH, the network can configure the same repetition numbers for Msg4 HARQ-ACK feedback and Msg B HARQ-ACK feedback. In another example, the network could have two separate configurations. For example, for Msg4 HARQ-ACK feedback, 1, 2, and 4 are used, and for MsgB HARQ-ACK feedback, either 2, 4, or 8 are supported.

The method 200 includes receiving (204), by the UE, the RSRP threshold for PUCCH repetition for MsgB HARQ-ACK. In Msg4 HARQ-ACK, the UE may request the Msg4 HARQ-ACK repetition if the RSRP measurement for the Synchronization Signal Block (SSB) is below a threshold. The UE listens to the SSB and measures the RSRP value. If the value is below a threshold, the UE requests Msg4 HARQ-ACK feedback. The same can apply for MsgB HARQ-ACK feedback. The respective thresholds for requesting Msg4 HARQ-ACK feedback and MsgB HARQ-ACK feedback can be different from one another. In a terrestrial network, the 2-step RACH is triggered if the RSRP is larger than threshold. The first RSRP threshold test is applied by the UE to determine whether PUCCH repetition is applied. The second threshold test (MsgA RSRP threshold) determines whether to trigger the 2-step RACH. The RSRP threshold to trigger 2-step RACH in the NTN band generally larger than the RSRP threshold ("msgA-RSRP-Threshold" in RACHConfigCOmmonTwoStepRA) to trigger 2-step RACH in the terrestrial network (TN) band. In NTN scenarios, the 2-step RACH is preferred because of the larger propagation delay between the UE and the satellite, and the 2-step RACH has smaller latency. To bias the 2-step RACH for NTN, the RSRP is set lower than generally set for the TN band. The RSRP threshold for triggering PUCCH repetition and the RSRP threshold for triggering 2-step RACH are independent of one another.

The method 200 includes reporting (206), by the UE, capability of UE or request on PUCCH repetition for MsgB HARQ-ACK. Once the UE determines that 2-step RACH is being used and the repetition factor for PUCCH is determined, the UE can report the UE capability or its request for PUCCH repetition for message B based on the UE capability of 2-step RACH (2-step RACH is optional). In other words, the UE reports its capability or reports its request for MsgB feedback repetition. There is a 1-bit (two state) indicator. State 1 represents no capability or no repetition request. State 2 indicates that a repetition capability is satisfied, or a repetition request is sent. If the RSRP threshold is configured, the RSRP threshold (threshold 1 or threshold 2), the UE reports its request for MsgB HARQ-ACK feedback repetition. If the threshold is not configured, the UE indicates it can perform PUCCH repetition for MsgB. This is therefore either a capability report or a request report. If these conditions are not satisfied, the UE does not request PUCCH repetition for MsgB. In some implementations, the UE performs the capability or request report using the Msg A PUSCH. In some implementations, the UE uses one reserved bit in a in MAC sub-header to indicate repetition capability or request. In some implementations, the UE uses a same or a different reserved bit for indicating repetition capability or request for PUCCH repetition for Msg 4 HARQ-ACK. The UE can use logical cell identifier (LCID) codepoints to indicate repetition capability or request. The UE can send the capability or request report using Msg A PRACH. In some implementations, dedicated PRACH occasions or dedicated PRACH preambles in shared PRACH occasions indicate the repetition capability or request.

The method 200 includes receiving (208), at the UE, indicated the PUCCH repetition number in DCI scheduling MsgB PDSCH. Once the UE reports its capability or requests MsgB repetitions, the network indicates how many repetitions for MsgB HARQ-ACK. This is indicated through MsgB. This could be indicated through the scheduling at the DCI field of MsgB to indicate the actual repetition number. For example, the network may configure four repetition numbers: 1, 2, 4, or 8. The repetition number being used by the UE can be indicated in the DCI scheduling field. DCI scheduling MsgB has many reserved bits. One or two of the reserved bits can be used to indicate the reputation number. In another example, bits in the MCS (modulation and coding scheme) field can be used to indicate the actual repetition number. The DCI format can be a variant of the DCI structure described in TS 38.212 (version 17.5.0) Section 7.3.1.2.1.

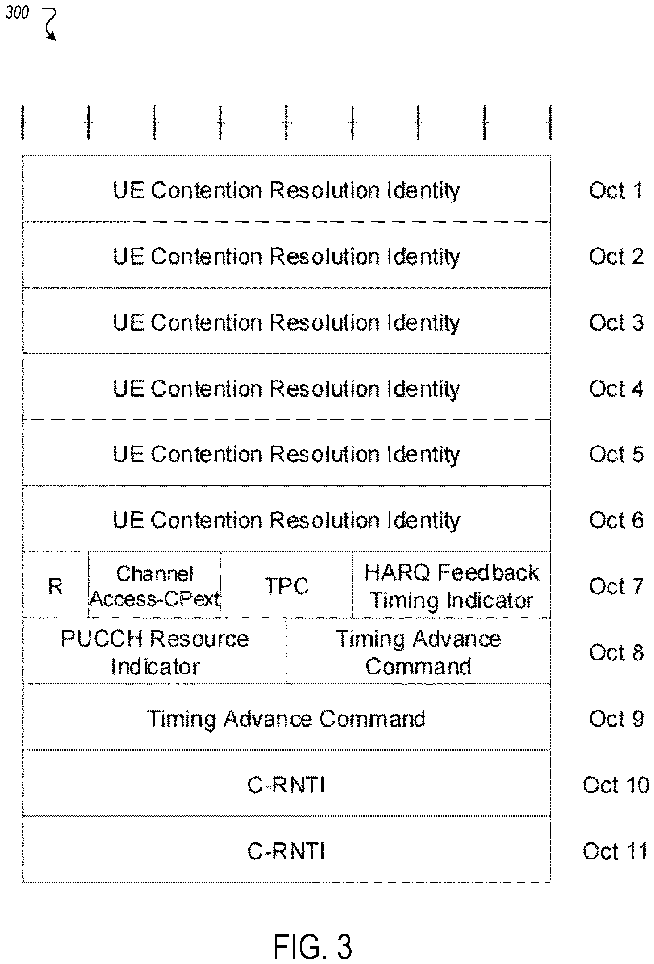

The method 200 includes applying (210), by the UE, the indicated PUCCH repetition number for MsgB HARQ-ACK. In an alternative, some bits in the MAC layer (like the successful RAR) can be used. FIG. 3 shows an example of this alternative.

FIG. 3 illustrates example resources 300 for PUCCH repetition. Bits from the successRAR can be used to indicate, by the UE, the PUCCH repetition number. The UE can reuse the bits of the field in successRAR. For example, the UE can re-interpret channel access-CPext if the UE is operating on the non-shared spectrum. The UE can re-interpret bits in HARQ Feedback Timing Indicator. The UE can re-interpret the two bits of the TPC commands. The UE can use 1 reserved bit and 1 bit re-interpretation of another of these fields.

In an example, the UE can reuse bits shown in octet 7 in FIG. 3. Specifically, the UE can reinterpret the reserved bit R, the channel access-CPext bits, TPC bits, or the HARQ feedback timing indicator bits of octet 7. These fields are generally used for the unlicensed spectrum. In the NTN scenarios described herein, the UE is generally operating using the licensed spectrum. One more of these bits can be used for signaling the repetition number for the UE. in some implementations the repetition number signaling can use bits from a combination of fields such as the reserved but, the TPC commands, the HARQ feedback timing indicator bits, and/or the channel access CP extension. In these implementations a higher layer signaling can be used for signaling the repetition number for the UE. For example, the max CE of the successRAR can indicate the repetition number. In another example, the repetition number can be indicated in the DCI filed which is being used to schedule the message, as described previously. In some implementations the successRAR is a modification of the successRAR structure of TS38.321 (version 17.4.0) Section 6.2.3a.

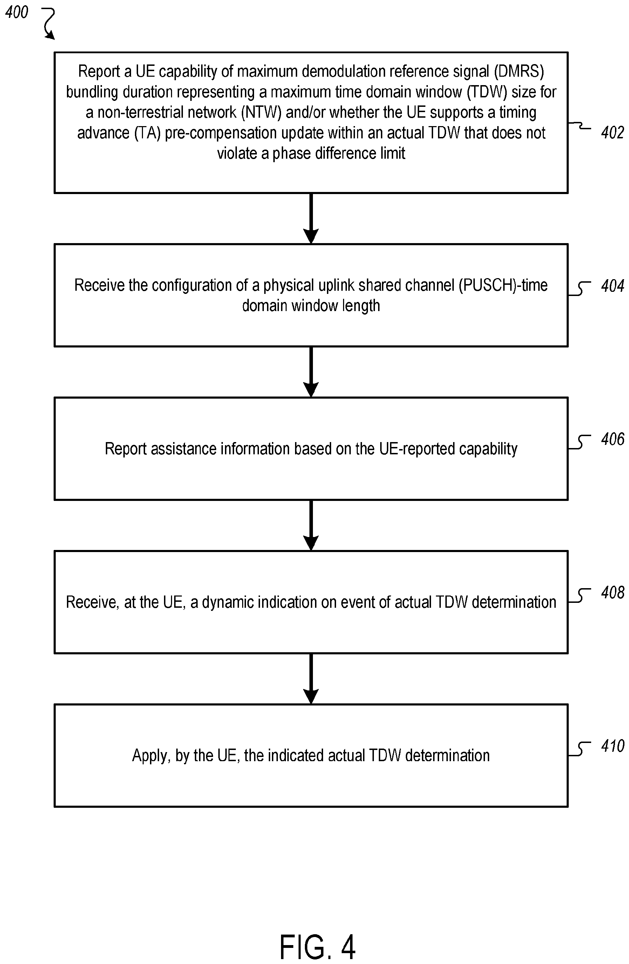

FIG. 4 illustrates a flowchart of an example method 400, according to some implementations. For clarity of presentation, the description that follows generally describes method 400 in the context of the other figures in this description. For example, method 400 can be performed by the UE 102 of FIG. 1. It will be understood that method 400 can be performed, for example, by any suitable system, environment, software, hardware, or a combination of systems, environments, software, and hardware, as appropriate. In some implementations, various steps of method 400 can be run in parallel, in combination, in loops, or in any order.

The method 400 includes reporting (402), by the UE, a UE capability of maximum DMRS bundling duration (a maximum TDW size) for NTN and/or whether the UE supports a TA pre-compensation update within an actual TDW that does not violate phase difference limit. For DMRS bundling in NTN, the UE reports its capability of a maximum TW or the TW size for a maximum DMRS bundling duration for the NTN environment with taking TA pre-compensation update into account. The UE reports whether it supports the TA pre-composition update within the actual TDW. The UE reports these capabilities, and the UE may or may not receive this configuration of the PUSCH TDM length.

The method 400 includes receiving (404), by the UE, the configuration of PUSCH-*TimeDomainWindow* Length. The UE may then additionally report the UE assistance information based on the UE reported capability. The method 400 includes reporting (406), by the UE, assistance information based on the UE reported capability. Specifically, if the UE reports that it can support at a TA pre-compensation update within the actual TDW, the UE may additionally report some assistance information for how to determine the TDW size. The UE may receive a dynamic indication on the event of the actual TDW determination to apply the event to determine the actual TDW based on the configured TDW.

The UE reports the maximum TDW size based on the pre-compensation to keep the phase continuity limit, but the UE does not consider the TA pre-compensation. The UE can report the maximum TDW without taking the TA pre-compensation into account. In another example, the UE can report two maximum TDW sizes. A first reported maximum TDW size is without taking pre-compensation update into account. The second reported maximum TDW size is taking the TA pre-compensation update into account.

When the UE reports the maximum TDW size, the UE can additionally report whether or not the UE supports the TA pre-compensation. The additional report can include one bit of information. In this example, the UE indicates with a first value that it supports the pre-compensation.

For step 406, when the UE does not support TA pre-compensation update within an actual TDW that does not violate phase difference limit, the following triggering conditions can be used to indicate when the UE transmits assistance information. For example, if a new epoch time is broadcast, and the old epoch time has expired or exceeds its validity duration, the UE may need to adjust the TA during the actual TDW size. The UE reports the assistance information such as a TA adjustment timing, or to use the current used epoch timing or validity duration. These indications are included in the reported assistance information. The container for the report could be the MAC CE, RRC, or UCI.

In some implementations, the UE capabilities indicate that the UE did not perform a TA pre-composition update during the time difference to satisfy the phase discontinuity requirement. The UE then does not report the adjustment timing as assistance information.

The method 400 includes receiving (408), at the UE, dynamic indication on event of actual TDW determination, as previously described. The method 400 includes applying (410), by the UE, the indicated actual TDW determination. The UE receives the dynamic indication of the TDW size. The actual TDW window size is determined based on the network indication, such as by the gNB through the MAC CE or the DCI, which is based on the UE reported assistance information.

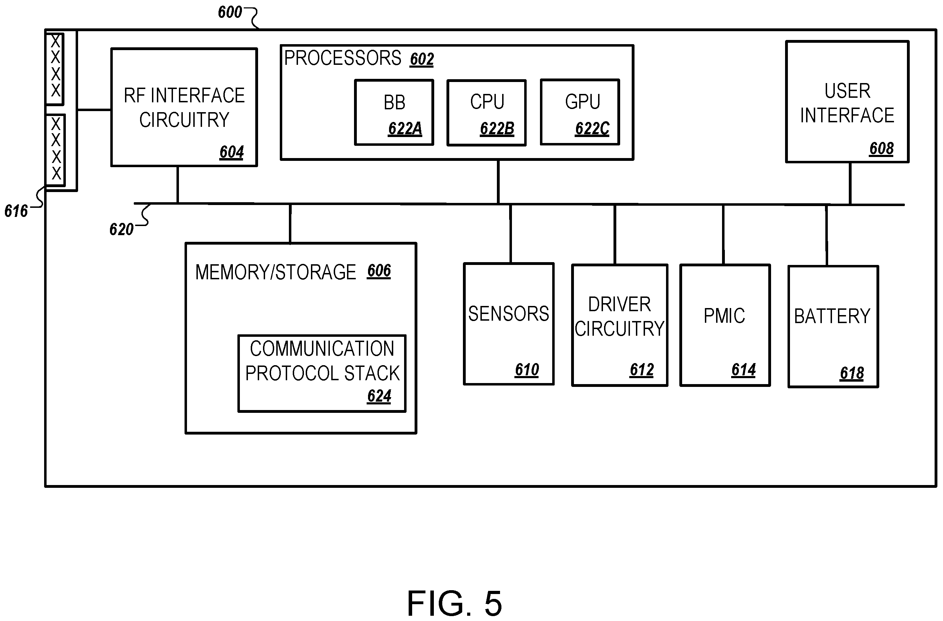

FIG. 5 illustrates an example UE 600, according to some implementations. The UE 600 may be similar to and substantially interchangeable with UE 102 of FIG. 1.

The UE 600 may be any mobile or non-mobile computing device, such as, for example, mobile phones, computers, tablets, industrial wireless sensors (for example, microphones, pressure sensors, thermometers, motion sensors, accelerometers, inventory sensors, electric voltage/current meters, etc.), video devices (for example, cameras, video cameras, etc.), wearable devices (for example, a smart watch), relaxed-IoT devices.

The UE 600 may include processors 602, RF interface circuitry 604, memory/storage 606, user interface 608, sensors 610, driver circuitry 612, power management integrated circuit (PMIC) 614, one or more antenna(s) 616, and battery 618. The components of the UE 600 may be implemented as integrated circuits (ICs), portions thereof, discrete electronic devices, or other modules, logic, hardware, software, firmware, or a combination thereof. The block diagram of FIG. 5 is intended to show a high-level view of some of the components of the UE 600. However, some of the components shown may be omitted, additional components may be present, and different arrangement of the components shown may occur in other implementations.

The components of the UE 600 may be coupled with various other components over one or more interconnects 620, which may represent any type of interface, input/output, bus (local, system, or expansion), transmission line, trace, optical connection, etc. that allows various circuit components (on common or different chips or chipsets) to interact with one another.

The processors 602 may include processor circuitry such as, for example, baseband processor circuitry (BB) 622A, central processor unit circuitry (CPU) 622B, and graphics processor unit circuitry (GPU) 622C. The processors 602 may include any type of circuitry or processor circuitry that executes or otherwise operates computer-executable instructions, such as program code, software modules, or functional processes from memory/storage 606 to cause the UE 600 to perform operations as described herein.

In some implementations, the baseband processor circuitry 622A may access a communication protocol stack 624 in the memory/storage 606 to communicate over a 3GPP compatible network. In general, the baseband processor circuitry 622A may access the communication protocol stack to perform user plane functions at a physical (PHY) layer, medium access control (MAC) layer, radio link control (RLC) layer, packet data convergence protocol (PDCP) layer, service data adaptation protocol (SDAP) layer, and PDU layer; and perform control plane functions at a PHY layer, MAC layer, RLC layer, PDCP layer, RRC layer, and a non-access stratum layer. In some implementations, the PHY layer operations may additionally/alternatively be performed by the components of the RF interface circuitry 604. The baseband processor circuitry 622A may generate or process baseband signals or waveforms that carry information in 3GPP-compatible networks. In some implementations, the waveforms for NR may be based cyclic prefix orthogonal frequency division multiplexing (OFDM) "CP-OFDM" in the uplink or downlink, and discrete Fourier transform spread OFDM "DFT-S-OFDM" in the uplink.

The memory/storage 606 may include one or more non-transitory, computer-readable media that includes instructions (for example, communication protocol stack 624) that may be executed by one or more of the processors 602 to cause the UE 600 to perform various operations described herein. The memory/storage 606 include any type of volatile or non-volatile memory that may be distributed throughout the UE 600. In some implementations, some of the memory/storage 606 may be located on the processors 602 themselves (for example, L1 and L2 cache), while other memory/storage 606 is external to the processors 602 but accessible thereto via a memory interface. The memory/storage 606 may include any suitable volatile or non-volatile memory such as, but not limited to, dynamic random-access memory (DRAM), static random-access memory (SRAM), erasable programmable read only memory (EPROM), electrically erasable programmable read only memory (EEPROM), Flash memory, solid-state memory, or any other type of memory device technology.

The RF interface circuitry 604 may include transceiver circuitry and radio frequency front module (RFEM) that allows the UE 600 to communicate with other devices over a radio access network. The RF interface circuitry 604 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 616 and proceed to filter and amplify (with a low-noise amplifier) the signal. The signal may be provided to a receiver of the transceiver that downconverts the RF signal into a baseband signal that is provided to the baseband processor of the processors 602.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 616. In various implementations, the RF interface circuitry 604 may be configured to transmit/receive signals in a manner compatible with NR access technologies.

The antenna(s) 616 may include one or more antenna elements to convert electrical signals into radio waves to travel through the air and to convert received radio waves into electrical signals. The antenna elements may be arranged into one or more antenna panels. The antenna(s) 616 may have antenna panels that are omnidirectional, directional, or a combination thereof to enable beamforming and multiple input, multiple output communications. The antenna(s) 616 may include microstrip antennas, printed antennas fabricated on the surface of one or more printed circuit boards, patch antennas, phased array antennas, etc. The antenna(s) 616 may have one or more panels designed for specific frequency bands including bands in FR1 or FR2.

The user interface 608 includes various input/output (I/O) devices designed to enable user interaction with the UE 600. The user interface 608 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 600.

The sensors 610 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 612 may include software and hardware elements that operate to control particular devices that are embedded in the UE 600, attached to the UE 600, or otherwise communicatively coupled with the UE 600. The driver circuitry 612 may include individual drivers allowing other components to interact with or control various input/output (I/O) devices that may be present within, or connected to, the UE 600. For example, driver circuitry 612 may include a display driver to control and allow access to a display device, a touchscreen driver to control and allow access to a touchscreen interface, sensor drivers to obtain sensor readings of sensors 610 and control and allow access to sensors 610, drivers to obtain actuator positions of electro-mechanic components or control and allow access to the electro-mechanic components, a camera driver to control and allow access to an embedded image capture device, audio drivers to control and allow access to one or more audio devices.

The PMIC 614 may manage power provided to various components of the UE 600. In particular, with respect to the processors 602, the PMIC 614 may control power-source selection, voltage scaling, battery charging, or DC-to-DC conversion.

In some implementations, the PMIC 614 may control, or otherwise be part of, various power saving mechanisms of the UE 600. A battery 618 may power the UE 600, although in some examples the UE 600 may be mounted deployed in a fixed location and may have a power supply coupled to an electrical grid. The battery 618 may be a lithium-ion battery, a metal-air battery, such as a zinc-air battery, an aluminum-air battery, a lithium-air battery, and the like. In some implementations, such as in vehicle-based applications, the battery 618 may be a typical lead-acid automotive battery.

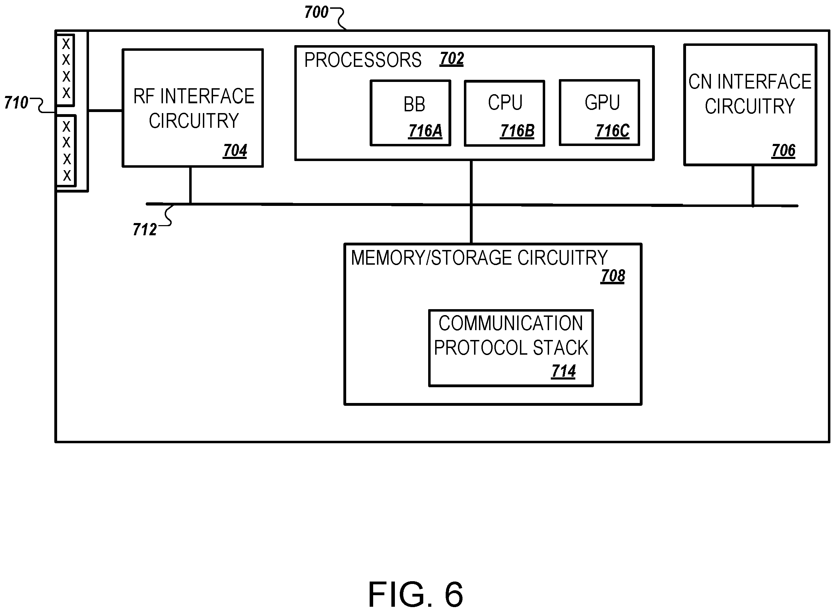

FIG. 6 illustrates an example access node 700 (e.g., a base station or gNB), according to some implementations. The access node 700 may be similar to and substantially interchangeable with base station 104. The access node 700 may include processors 702, RF interface circuitry 704, core network (CN) interface circuitry 706, memory/storage circuitry 708, and one or more antenna(s) 710.

The components of the access node 700 may be coupled with various other components over one or more interconnects 712. The processors 702, RF interface circuitry 704, memory/storage circuitry 708 (including communication protocol stack 714), antenna(s) 710, and interconnects 712 may be similar to like-named elements shown and described with respect to FIG. 5. For example, the processors 702 may include processor circuitry such as, for example, baseband processor circuitry (BB) 716A, central processor unit circuitry (CPU) 716B, and graphics processor unit circuitry (GPU) 716C.

The CN interface circuitry 706 may provide connectivity to a core network, for example, a 5th Generation Core network (5GC) using a 5GC-compatible network interface protocol such as carrier Ethernet protocols, or some other suitable protocol. Network connectivity may be provided to/from the access node 700 via a fiber optic or wireless backhaul. The CN interface circuitry 706 may include one or more dedicated processors or FPGAs to communicate using one or more of the aforementioned protocols. In some implementations, the CN interface circuitry 706 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can include ground stations (e.g., terrestrial access points) or satellite stations providing coverage within a geographic area (e.g., a cell). As used herein, the term "NG RAN node" or the like may refer to an access node 700 that operates in an NR or 5G system (for example, a gNB), and the term "E-UTRAN node" or the like may refer to an access node 700 that operates in an LTE or 4G system (e.g., an eNB). According to various implementations, the access node 700 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some implementations, all or parts of the access node 700 may be implemented as one or more software entities running on server computers as part of a virtual network, which may be referred to as a CRAN and/or a virtual baseband unit pool (vBBUP). In V2X scenarios, the access node 700 may be or act as a "Roadside Unit." The term "Roadside Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Relevant disclosure is also provided in the following numbered clauses.
1. One or more processors configured for wireless communication by performing operations comprising:
   receiving configuration information specifying a repetition factor for a physical uplink control channel (PUCCH) for a hybrid automatic repeat request (HARQ-ACK) transmission associated with a random-access message;
   receiving information representing a reference signal receive power (RSRP) threshold for a PUCCH repetition for the HARQ-ACK transmission;
   encoding, based on the RSRP threshold and the configuration information specifying the repetition factor, a capability report indicating a PUCCH repetition number for the HARQ-ACK transmission or a request for the PUCCH repetition number for the HARQ-ACK transmission;
   receiving, based on the capability report or the request, an indicated PUCCH repetition number for the HARQ-ACK transmission; and
   preparing the HARQ-ACK transmission for repetition based on the indicated PUCCH repetition number.
2. The one or more processors of clause 1, wherein the repetition factor for PUCCH for the HARQ-ACK transmission is one of 1,2, 4, or 8.
3. The one or more processors of clause 1, the operations further comprising encoding for transmission a PUCCH repetition based on a different PUCCH repetition factor than the PUCCH repetition factor for the HARQ-ACK transmission.
4. The one or more processors of clause 1, wherein the RSRP threshold for PUCCH repetition for the HARQ-ACK transmission is different than a PUCCH repetition for a Msg4 HARQ-ACK transmission.
5. The one or more processors of clause 1, wherein the capability report or the request is based on a 2-step random access channel (RACH) capability of a user equipment (UE).
6. The one or more processors of clause 5, wherein the capability report comprises 1-bit indicating either that the UE has no repetition capability or that the UE has repetition capability.
7. The one or more processors of clause 1, the operations further comprising:
   determining that a RSRP measurement is below the RSRP threshold and that a UE has a capability of PUCCH repetition; and
   encoding for transmission the request for the PUCCH repetition for the HARQ-ACK transmission.
8. The one or more processors of clause 1, wherein the RSRP threshold is not configured or is configured with a specific value, the operations further comprising:
   transmitting the capability report on PUCCH repetition for the HARQ-ACK transmission.
9. The one or more processors of clause 1, wherein the capability report or the request is transmitted using a physical uplink shared channel (PUSCH).
10. The one or more processors of clause 9, wherein a reserved bit in a medium access control (MAC) sub-header indicates the PUCCH repetition number or the request for the PUCCH repetition number.
11. The one or more processors of clause 9, wherein a logical cell identifier (LCID) code indicates the PUCCH repetition number or the request for the PUCCH repetition number.
12. The one or more processors of clause 1, wherein the capability report or the request for the PUCCH repetition number is transmitted using a physical random-access channel (PRACH).
13. The one or more processors of clause 1, the operations further comprising configuring scheduling downlink control information (DCI) fields for indicating the PUCCH repetition number.
14. The one or more processors of clause 13, wherein the DCI fields include one or more of reserved bit(s) or bits in an MCS field.
15. The one or more processors of clause 1, wherein one or more fields of a message for a successful random-access response (sucessRAR) are configured for indicating the PUCCH repetition number.
16. The one or more processors of clause 15, wherein the one or more fields of the successRAR include a channel access-CPext field, a reserved bit, a TPC field, a HARQ feedback timing indicator, or a combination thereof.
17. The one or more processors of clause 1, wherein the PUCCH repetition for the HARQ-ACK transmission has a higher priority than sidelink transmissions or receptions.
18. One or more processors configured for wireless communication by performing operations comprising:
   encoding, for transmission, information representing a user equipment (UE) capability of a maximum demodulation reference signal (DMRS) bundling duration representing a maximum time domain window (TDW) size for non-terrestrial network (NTN) or whether the UE supports a timing advance (TA) pre-compensation update within an actual TDW that does not violate phase difference limit;
   receiving information representing a configuration of a physical uplink shared channel (PUSCH) TDW length;
   encoding, for transmission, assistance information based on the information representing the UE capability;
   receiving information representing an indication of a TDW determination on an event; and
   applying the TDW determination based on receiving the indication.
19. The one or more processors of clause 18, the operations further comprising:
   encoding for transmission a second maximum TDW size that accounts for the TA pre-compensation update.
20. The one or more processors of clause 19, wherein a nominal TDW size includes a minimum between the second maximum TDW size and the maximum TDW size of the UE capability.

## Claims

1. One or more processors configured for wireless communication by performing operations comprising:
receiving configuration information specifying a repetition factor for a physical uplink control channel, PUCCH, for a hybrid automatic repeat request, HARQ-ACK, transmission associated with a random-access message;
receiving information representing a reference signal receive power, RSRP, threshold for a PUCCH repetition for the HARQ-ACK transmission;
encoding, based on the RSRP threshold and the configuration information specifying the repetition factor, a capability report indicating a PUCCH repetition number for the HARQ-ACK transmission or a request for the PUCCH repetition number for the HARQ-ACK transmission;
receiving, based on the capability report or the request, an indicated PUCCH repetition number for the HARQ-ACK transmission; and
preparing the HARQ-ACK transmission for repetition based on the indicated PUCCH repetition number.

2. The one or more processors of claim 1, wherein the repetition factor for PUCCH for the HARQ-ACK transmission is one of 1,2, 4, or 8.

3. The one or more processors of claim 1, the operations further comprising encoding for transmission a PUCCH repetition based on a different PUCCH repetition factor than the PUCCH repetition factor for the HARQ-ACK transmission.

4. The one or more processors of claim 1, wherein the RSRP threshold for PUCCH repetition for the HARQ-ACK transmission is different than a PUCCH repetition for a Msg4 HARQ-ACK transmission.

5. The one or more processors of claim 1, wherein the capability report or the request is based on a 2-step random access channel, RACH, capability of a user equipment, UE.

6. The one or more processors of claim 5, wherein the capability report comprises 1-bit indicating either that the UE has no repetition capability or that the UE has repetition capability.

7. The one or more processors of claim 1, the operations further comprising:
determining that a RSRP measurement is below the RSRP threshold and that a UE has a capability of PUCCH repetition; and
encoding for transmission the request for the PUCCH repetition for the HARQ-ACK transmission.

8. The one or more processors of claim 1, wherein the RSRP threshold is not configured or is configured with a specific value, the operations further comprising:
transmitting the capability report on PUCCH repetition for the HARQ-ACK transmission.

9. The one or more processors of claim 1, wherein the capability report or the request is transmitted using a physical uplink shared channel, PUSCH.

10. The one or more processors of claim 9, wherein a reserved bit in a medium access control, MAC, sub-header indicates the PUCCH repetition number or the request for the PUCCH repetition number; or
wherein a logical cell identifier, LCID, code indicates the PUCCH repetition number or the request for the PUCCH repetition number.

11. The one or more processors of claim 1, wherein the capability report or the request for the PUCCH repetition number is transmitted using a physical random-access channel, PRACH.

12. The one or more processors of claim 1, the operations further comprising configuring scheduling downlink control information, DCI, fields for indicating the PUCCH repetition number, wherein the DCI fields include one or more of reserved bit(s) or bits in an MCS field.

13. The one or more processors of claim 1, wherein one or more fields of a message for a successful random-access response, sucessRAR, are configured for indicating the PUCCH repetition number, and wherein the one or more fields of the successRAR include a channel access-CPext field, a reserved bit, a TPC field, a HARQ feedback timing indicator, or a combination thereof.

14. The one or more processors of claim 1, wherein the PUCCH repetition for the HARQ-ACK transmission has a higher priority than sidelink transmissions or receptions.

15. A method performed by any of the one or more processors of claims 1-14.
